# EUROPEAN PATENT APPLICATION

(11) **EP 4 752 714 A1**
(43) Date of publication of application: **03.06.2026**
(21) Application number: 25829355.4
(22) Date of filing: 17.03.2025
(51) Int. Cl.: G06F 9/445

(54) **APPLICATION MANAGEMENT METHOD AND APPARATUS**

(30) Priority: 20.06.2024 CN 202410808558
(71) Applicant: HUAWEI TECHNOLOGIES CO., LTD., Shenzhen 518129 (CN)
(72) Inventor: HOU, Xiaye, Shenzhen, Guangdong 518129 (CN); BI, Yan, Shenzhen, Guangdong 518129 (CN)
(74) Representative: Körber, Martin Hans
(86) International application number: PCT/CN2025/083012
(87) International publication number: WO 2025/260865

(57) **Abstract**

Embodiments of this application provide an application management method and an apparatus, to properly manage and control minor users' use of electronic devices. The method includes: running a first application; detecting a first operation for the first application, and enabling a first mode, where the first mode includes a youth protection mode; running the first application in the first mode; and detecting a second operation of starting a second application, and running the second application in the first mode.

## Description

### CROSS-REFERENCE TO RELATED APPLICATIONS

This application claims priority to Chinese Patent Application No. 202410808558.6, filed with the China National Intellectual Property Administration on June 20, 2024 and entitled "APPLICATION MANAGEMENT METHOD AND APPARATUS", which is incorporated herein by reference in its entirety.

### TECHNICAL FIELD

This application relates to the field of terminal technologies, and in particular to an application management method and an apparatus.

### BACKGROUND

With development of the information age, functions of electronic devices are gradually improved. Mobile phones are used as an example. Users may use the mobile phones to play games, watch videos, search learning materials, attend online courses, and so on.

Currently, to manage and control minor users' use of electronic devices, allowable usage duration and/or an allowable time period of the electronic devices may be set. However, after the allowable usage duration has been used up, or during a non-allowable time period, minor users are unable to use the electronic devices. As a result, if the minor users spend a long time on entertainment (for example, playing games), the minor users may unable to use the electronic devices for learning-related activities.

### SUMMARY

This application provides an application management method and an apparatus, to properly manage and control minor users' use of electronic devices.

According to a first aspect, an application management method is provided. The method may be applied to an electronic device. The electronic device may be an electronic device equipped with a harmony operating system (harmony operating system, Harmony OS), or may be an electronic device equipped with another operating system such as Android (Android). The method includes: running a first application; detecting a first operation for the first application, and enabling a first mode, where the first mode includes a youth protection mode; running the first application in the first mode; and detecting a second operation of starting a second application, and running the second application in the first mode.

In this embodiment of this application, when detecting that the youth protection mode is enabled for the first application, the electronic device may run the first application in the youth protection mode. In addition, when the second application that is capable of running in the youth protection mode is started, the second application may be directly run in the youth protection mode. A user does not need to enable the youth protection mode for the second application again. To be specific, the user may enable the youth protection mode for a plurality of applications by performing a single operation of enabling the youth protection mode. This helps improve efficiency in enabling the youth protection mode, thereby improving application management and control efficiency and improving user experience.

In a possible implementation, before running the second application in the first mode, the method further includes: notifying the second application to run the second application in the first mode.

In a possible implementation, the second application is an application running in a background, or the second application is an application that is not started when the first mode is enabled.

In a possible implementation, the second application is the application that is not started when the first mode is enabled, and before notifying the second application to run the second application in the first mode, the method further includes: receiving a second message from the second application, where the second message is used to query whether to run in the first mode.

In a possible implementation, notifying the second application to run the second application in the first mode includes: sending a first message to the second application, where the first message is used to notify the second application to run the second application in the first mode.

In a possible implementation, the first message includes an age of a first user and/or a first identifier, the first user is a user who uses the electronic device after the first mode is enabled for running, and the first identifier indicates the second application to run the second application in the first mode. Age information is sent to the application, so that content displayed by the application is age-related, that is, the displayed content better meets a viewing requirement of the user.

In a possible implementation, the method further includes: after the first mode is enabled, determining an attribute of a third application, and managing and controlling the third application based on the attribute, where the third application is not connected to a framework service corresponding to the first mode. An application that is not connected to a minor protection framework can be managed, thereby improving application management efficiency.

In a possible implementation, managing and controlling the third application based on the attribute includes: exiting background running if the attribute does not match the first user, and the third application is an application running in a background, where the first user is the user who uses the electronic device after the first mode is enabled for running; or not responding to an operation of starting the third application if the attribute matches the first user, and the third application is an application that is not started when the first mode is enabled.

In a possible implementation, the method further includes: after the first mode is enabled, displaying the first mode on an interface of a setting application. This helps the user determine a current mode of the electronic device in a timely manner, offering better user experience.

In a possible implementation, the method further includes: in response to a third operation for the setting application, displaying at least one application on a first interface of the setting application, where the at least one application includes the first application and the second application.

In a possible implementation, the at least one application further includes the third application, and the third application is not connected to the framework service corresponding to the first mode.

In a possible implementation, the method further includes: in response to a fourth operation that is based on the first interface, deleting a fourth application from the at least one application, or adding a fifth application to the at least one application.

In a possible implementation, the method further includes: running the first application in the first mode; detecting a fifth operation for the first application, and performing identity verification on a second user, where the second user is a user who performs the fifth operation; when the verification succeeds, disabling the first mode, and running the first application in a second mode; and detecting the second operation, and running the second application in the second mode. When the user disables a first function, password verification needs to be performed only once, and password verification does not need to be performed for each application a plurality of times. This reduces an operation process of the user, and effectively improves efficiency in disabling the first function.

In a possible implementation, content displayed on an interface of the first application or an interface of the second application is associated with the first mode when the first application or the second application runs in the first mode.

According to a second aspect, an application management method is provided. The method may be applied to an electronic device. The electronic device may be an electronic device equipped with a harmony operating system (harmony operating system, Harmony OS), or may be an electronic device equipped with another operating system such as Android (Android). The method includes: detecting a first operation for a first application, and enabling a first mode, where the first application is a setting application, and the first mode includes a youth protection mode; and detecting a second operation of starting a second application, and running the second application in the first mode.

In this embodiment of this application, the youth protection mode may be enabled or disabled for the plurality of applications in a unified manner through the setting application, so that the plurality of applications can run in the youth protection mode when switched to a foreground, instead of simply setting usage duration or a usage time period of a mobile phone. This can more reasonably manage and control minors' use of the electronic device.

In a possible implementation, before running the second application in the first mode, the method further includes: notifying the second application to run the second application in the first mode.

In a possible implementation, the second application is an application running in a background, or the second application is an application that is not started when the first mode is enabled.

In a possible implementation, the second application is the application that is not started when the first mode is enabled, and before notifying the second application to run the second application in the first mode, the method further includes: receiving a second message from the second application, where the second message is used to query whether to run in the first mode.

In a possible implementation, notifying the second application to run the second application in the first mode includes: sending a first message to the second application, where the first message is used to notify the second application to run the second application in the first mode.

In a possible implementation, the first message includes an age of a first user and/or a first identifier, the first user is a user who uses the electronic device after the first mode is enabled for running, and the first identifier indicates the second application to run the second application in the first mode.

In a possible implementation, the method further includes: after the first mode is enabled, determining an attribute of a third application, and managing and controlling the third application based on the attribute, where the third application is not connected to a framework service corresponding to the first mode.

In a possible implementation, managing and controlling the third application based on the attribute includes: exiting background running if the attribute does not match the first user, and the third application is an application running in a background, where the first user is the user who uses the electronic device after the first mode is enabled for running; or not responding to an operation of starting the third application if the attribute matches the first user, and the third application is an application that is not started when the first mode is enabled.

In a possible implementation, the method further includes: after the first mode is enabled, displaying the first mode on an interface of the first application.

In a possible implementation, the method further includes: in response to a third operation for the setting application, displaying at least one application on a first interface of the first application, where the at least one application includes the first application and the second application.

In a possible implementation, the at least one application further includes the third application, and the third application is not connected to the framework service corresponding to the first mode.

In a possible implementation, the method further includes: in response to a fourth operation that is based on the first interface, deleting a fourth application from the at least one application, or adding a fifth application to the at least one application.

In a possible implementation, the method further includes: detecting a fifth operation for the first application, and performing identity verification on a second user, where the second user is a user who performs the fifth operation; when the verification succeeds, disabling the first mode; and detecting the second operation, and running the second application in the second mode.

In a possible implementation, content displayed on an interface of the second application is associated with the first mode when the second application runs in the first mode.

According to a third aspect, a communication apparatus is provided. The communication apparatus may be an electronic device, or may be a chip or a chip system used in the electronic device. The communication apparatus includes a communication interface and a processor, and optionally, further includes a memory. The memory is configured to store a computer program, and the processor is coupled to the memory and the communication interface. When the processor reads the computer program or instructions, the communication apparatus is enabled to perform the method performed by the electronic device in the first aspect or the second aspect.

According to a fourth aspect, a computer-readable storage medium is provided. The computer-readable storage medium is configured to store a computer program. When the computer program is run on a computer, the computer is enabled to perform the method according to the first aspect or the second aspect.

According to a fifth aspect, a computer program product is provided, including a computer program. When the computer program is run on a computer, the computer is enabled to perform the method according to the first aspect or the second aspect.

According to a sixth aspect, a graphical user interface on an electronic device is provided. The electronic device has a display, a memory, and a processor. The processor is configured to execute one or more computer programs stored in the memory. The graphical user interface includes a graphical user interface displayed when the electronic device performs the method according to the first aspect or the second aspect.

According to a seventh aspect, a chip system is provided, including a processor and an interface. The processor is configured to invoke instructions from the interface and run the instructions, to enable the chip system to implement the method according to the first aspect or the second aspect.

For beneficial effects of the second aspect to the seventh aspect, refer to the beneficial effects of the first aspect. Details are not described.

### BRIEF DESCRIPTION OF DRAWINGS

FIG. 1A is a diagram of a hardware structure of an electronic device according to an embodiment of this application;
FIG. 1B is a diagram of a software structure of an electronic device according to an embodiment of this application;
FIG. 1C is a diagram of another software structure of an electronic device according to an embodiment of this application;
FIG. 1D is a diagram of still another software structure of an electronic device according to an embodiment of this application;
FIG. 2(a) to FIG. 2(c) are diagrams of a user graphical interface of a mobile phone according to an embodiment of this application;
FIG. 3(a) to FIG. 3(c) are diagrams of a user graphical interface of a mobile phone according to an embodiment of this application;
FIG. 4 is a schematic flowchart of an application management method according to an embodiment of this application;
FIG. 5(a) to FIG. 5(c) are diagrams of a user graphical interface of a mobile phone according to an embodiment of this application;
FIG. 6(a) to FIG. 6(c) are diagrams of a user graphical interface of a mobile phone according to an embodiment of this application;
FIG. 7 is a schematic flowchart of another application management method according to an embodiment of this application;
FIG. 8 to FIG. 10 are flowcharts of examples of several application management methods according to an embodiment of this application; and
FIG. 11 is a diagram of a structure of an electronic device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

The following describes some terms in embodiments of this application, to facilitate understanding of a person skilled in the art.

An application (application, APP) in embodiments of this application is a software program that can implement one or more particular functions. Usually, a plurality of applications may be installed on a terminal device, for example, camera application, gallery application, SMS message application, multimedia message application, and various mailbox applications. The application mentioned below may be an application installed when the terminal device is delivered from a factory, or may be an application downloaded from a network or obtained from another terminal device in a process in which a user uses the terminal device.

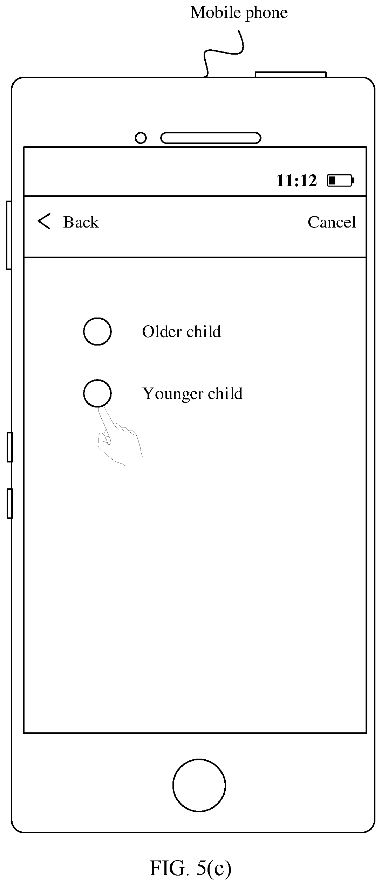

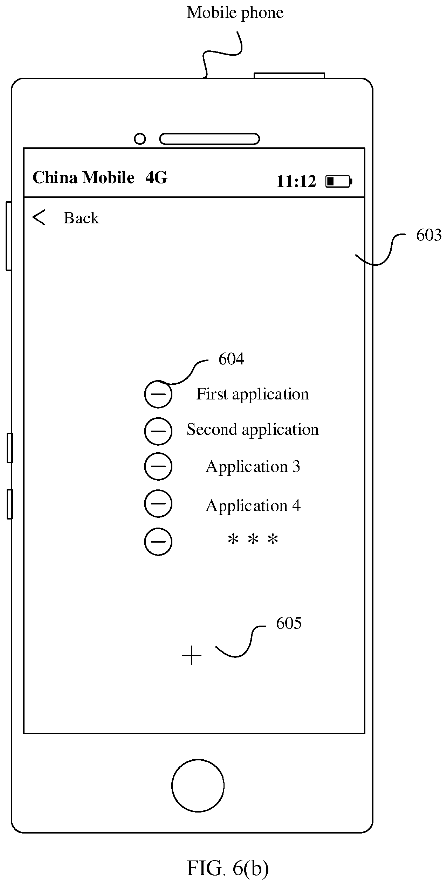

In embodiments of this application, when the first function is enabled or disabled, user selection may be performed, in which a user selection interface (which may alternatively be a user-to-be-selected interface) is related. In the user-to-be-selected interface, information (for example, a name or a nickname) of a plurality of users may be displayed for user selection, for example, an interface shown in FIG. 5(c) below. In addition, in embodiments of this application, during application management, an application may be added or deleted, and an application management interface is related. A plurality of applications may be displayed on the application management interface, for example, an interface 603 shown in FIG. 6(b) below.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions in embodiments, unless otherwise specified, "a plurality of" means two or more.

The following describes an electronic device, a graphical user interface (graphical user interface, GUI) used for the electronic device, and embodiments for using the electronic device. In some embodiments of this application, the electronic device may be an electronic device such as a mobile phone, a tablet computer, a wearable device (smartwatch), or an extended reality (extended reality, XR) device. A specific type of the electronic device is not limited in embodiments of this application. In this embodiment of this application, a mobile phone is used as an example of the electronic device.

Generally, the electronic device may support a plurality of applications, for example, one or more of the following applications: camera application, instant message receiving and sending application, photo management application, and entertainment application. There may be a plurality of types of entertainment applications, for example, short video application, game application, browser application, and the like.

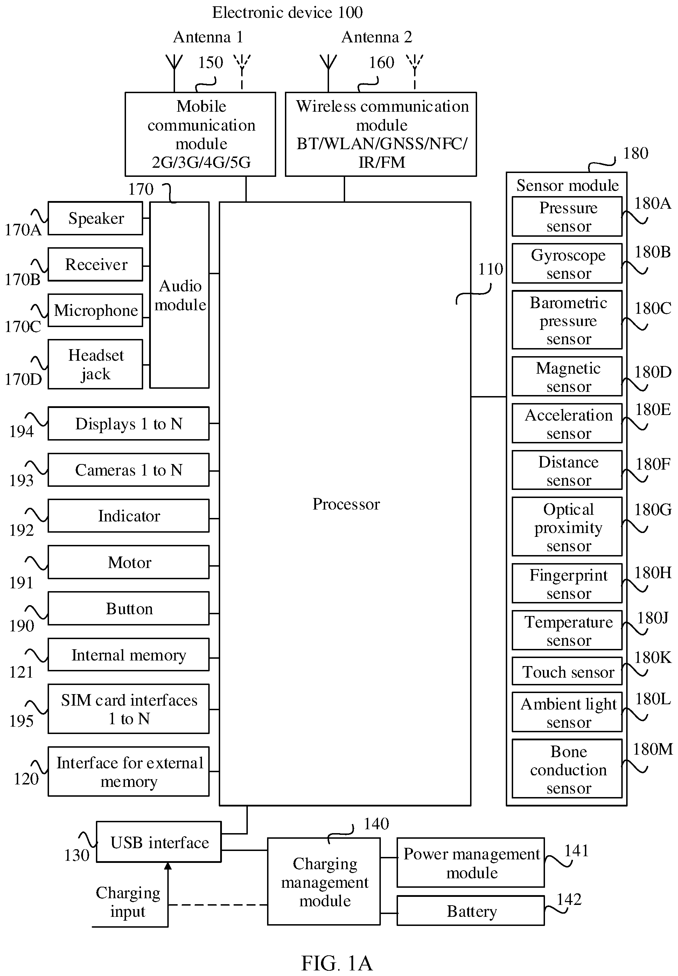

FIG. 1A is a diagram of a structure of an electronic device according to an embodiment of this application.

The electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device, or may be configured to transmit data between the electronic device and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, to supply power to the processor 110, the internal memory 121, the interface 120 for external memory, the display 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology, or the like and that is applied to the electronic device. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application (for example, iQIYI or WeChat), and the like. The data storage area may store data (for example, an image or a video) generated in a process of using the electronic device, and the like. In addition, the internal memory 121 may include a high-speed random access memory, or may include a nonvolatile memory, for example, at least one magnetic disk storage device, a flash storage device, or a universal flash storage (universal flash storage, UFS).

The interface 120 for external memory may be configured to connect to an external memory card, such as a micro SD card, to extend a storage capability of the electronic device. The external memory card communicates with the processor 110 through the interface 120 for external memory, to implement a data storage function. For example, files such as pictures or videos are stored in the external memory card.

The electronic device may implement an audio function such as music playing or recording by using the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the electronic device. In some embodiments, angular velocities of the electronic device around three axes (namely, x, y, and z axes) may be determined through the gyroscope sensor 180B.

The gyroscope sensor 180B may be configured to implement image stabilization during image shooting. The barometric pressure sensor 180C is configured to measure barometric pressure. In some embodiments, the electronic device calculates an altitude based on a barometric pressure value measured by the barometric pressure sensor 180C, to assist in positioning and navigation. The magnetic sensor 180D includes a Hall sensor. The electronic device may detect opening and closing of a flip leather case by using the magnetic sensor 180D. In some embodiments, when the electronic device is a flip phone, the electronic device may detect opening and closing of a flip cover by using the magnetic sensor 180D. Further, a feature such as flip-to-unlock is set based on a detected open or closed state of the leather case or a detected open or closed state of the flip cover. The acceleration sensor 180E may detect magnitudes of accelerations of the electronic device in various directions (generally along three axes), may detect a magnitude and a direction of gravity when the electronic device is still, and may be further configured to recognize a posture of the electronic device, thereby being used in applications such as screen switching between a landscape mode and a portrait mode, and a pedometer.

The distance sensor 180F is configured to measure a distance. The electronic device may measure the distance through infrared light or laser. In some embodiments, in a shooting scene, the electronic device may measure a distance by using the distance sensor 180F, to implement quick focusing. The optical proximity sensor 180G may include, for example, a light-emitting diode (LED) and an optical detector, for example, a photodiode. The light-emitting diode may be an infrared light-emitting diode. The electronic device emits infrared light through the light-emitting diode. The electronic device detects infrared reflected light from a nearby object by using the photodiode. When sufficient reflected light is detected, the electronic device may determine that there is an object near the electronic device. When insufficient reflected light is detected, the electronic device may determine that there is no object near the electronic device. The electronic device may detect, by using the optical proximity sensor 180G, that a user holds the electronic device close to the ear for a call, to automatically turn off a screen to save power. The optical proximity sensor 180G may also be used in a leather case mode or a pocket mode to automatically unlock or lock the screen.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may also work with the optical proximity sensor 180G to detect whether the electronic device is in a pocket, to avoid an accidental touch. The fingerprint sensor 180H is configured to collect a fingerprint. The electronic device may implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device lowers performance of a processor near the temperature sensor 180J, to reduce power consumption and implement thermal protection. In some other embodiments, when the temperature is lower than another threshold, the electronic device heats the battery 142 to avoid abnormal shutdown of the electronic device due to a low temperature. In some other embodiments, when the temperature is lower than still another threshold, the electronic device boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure pulse signal.

The button 190 includes a power button, a volume button, and the like. The button 190 may be a mechanical button, or may be a touch button. The electronic device may receive a button input, and generate a button signal input related to a user setting and function control of the electronic device. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or pulled out of the SIM card interface 195, so that the SIM card is in contact with or separated from the electronic device.

It may be understood that the components shown in FIG. 1A do not constitute a specific limitation on the electronic device. In some other embodiments of this application, the electronic device may include more or fewer components than those shown in FIG. 1A, or a combination of a part of the components, or splits from a part of the components, or an arrangement of different components. The components shown in the figure may be implemented by hardware, software, or a combination of software and hardware.

In some embodiments, a software system of the electronic device may use a layered architecture, an event-driven architecture, a microkernel architecture, a micro service architecture, or a cloud architecture. In the following embodiments, an Android (Android) system with a layered architecture is used as an example to describe a software structure of the electronic device.

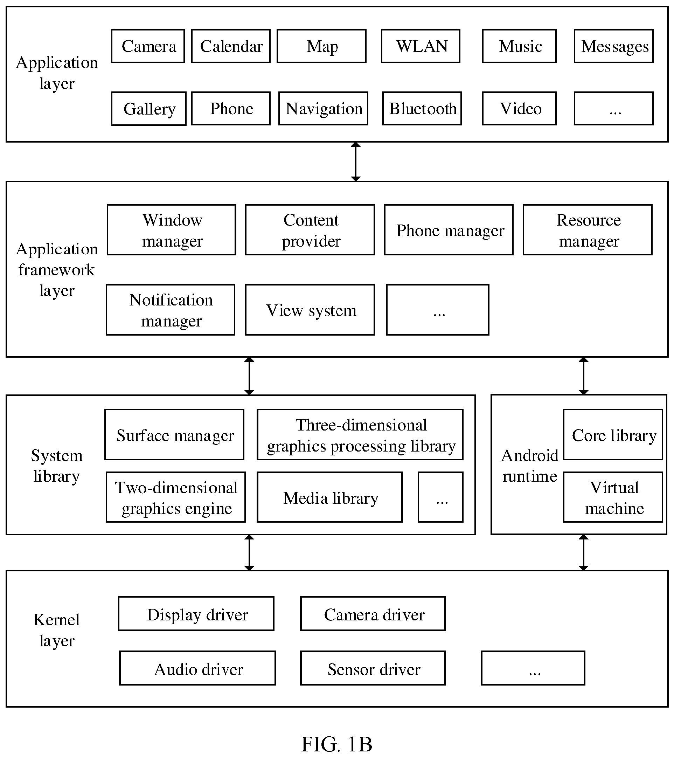

FIG. 1B is a block diagram of a software structure of an electronic device according to an embodiment of this application. In a layered architecture, software is divided into several layers, and each layer has a clear role and task. The layers communicate with each other through a software interface.

In some embodiments, the Android system is divided into four layers: an application layer, an application framework layer, an Android runtime (Android runtime) and system library, and a kernel layer from top to bottom. The application layer may include a series of application packages. As shown in FIG. 1B, the application packages may include applications such as Camera, Gallery, Calendar, Phone, Map, Navigation, WLAN, Bluetooth, Music, Video, and Messages. The application framework layer provides an application programming interface (application programming interface, API) and a programming framework for an application at the application layer. The application framework layer includes some predefined functions.

As shown in FIG. 1B, the application framework layer may include a window manager, a content provider, a view system, a phone manager, a resource manager, a notification manager, and the like. The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include videos, images, pictures, audios, calls that are made and answered, a browsing history and bookmarks, an address book, and the like. The view system includes visual controls, for example, a control for text display, a control for image display, and the like. The view system may be configured to construct an application. A display interface may include one or more views. For example, a display interface including an SMS message notification icon may include a view for text display and a view for image display. The phone manager is configured to provide a communication function of the electronic device, for example, management of a call status (including answering, declining, or the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system. The core library includes two parts: a function that needs to be called in Java language and a core library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, still image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

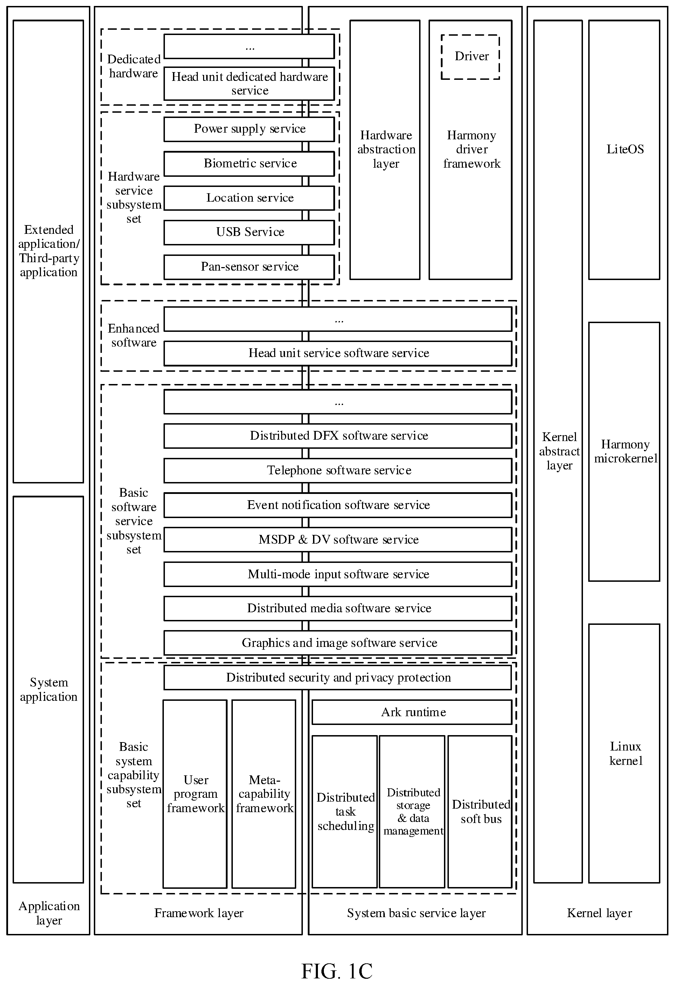

FIG. 1C is a block diagram of another software structure of an electronic device according to an embodiment of this application. In some embodiments, Harmony includes four layers: a kernel layer, a system basic capability layer, a framework layer, and an application layer from bottom to top.

A Harmony system adopts a multi-kernel design, optionally including a Linux kernel, a Harmony microkernel, and an Internet of things operating system (lite operating system, LiteOS). Through this design, appropriate system kernels can be selected for devices with different device capabilities. The kernel layer further includes a kernel abstract layer (kernel abstract layer, KAL) that provides basic kernel capabilities such as process management, thread management, memory management, file system management, network management, and peripheral management for another Harmony layer.

The system basic service layer is a core capability set of the Harmony system, and supports the Harmony system in providing a service for an application service through the framework layer in a multi-device deployment scenario. This layer optionally includes the following parts:

A basic system capability subsystem set provides a basic capability for an operation like running, scheduling, or migration of a distributed application on a plurality of devices provided with Harmony systems, and includes a distributed soft bus, distributed data management and file management, distributed task scheduling, Ark runtime, and distributed security and privacy protection. The Ark runtime provides C/C++/JavaScript multi-language runtime and a basic system class library, and also provides runtime for a Java program (namely, a part developed in a Java language in an application or at the framework layer) that is staticized through an Ark compiler. Code of the method for recording a call path in this embodiment of this application may be implemented in the Ark runtime.

A basic software service subsystem set provides a common and universal software service for the Harmony system, and includes subsystems such as graphics and image, distributed media, distributed artificial intelligence (artificial intelligence, AI), multi-mode input, mobile sensing development platform (mobile sensing development platform, MSDP) & device virtualization (device virtualization, DV), event notification, phone service, and distributed DFX. The basic software service subsystem set may be based on deployment environments of different device forms. Each subsystem may be tailored at a granularity of a function.

An enhanced software service subsystem set provides differentiated capability-enhanced software services for different devices in the Harmony system, and includes subsystems such as tablet service software, smart screen service software, head unit service software, and Internet of things (Internet of things, IoT) service software. The enhanced software service subsystem set may be tailored at a granularity of a subsystem based on deployment environments of different device forms. Each subsystem may also be tailored at a granularity of a function.

A Harmony driver framework (HDF) and a hardware abstraction layer (HAL) lay a foundation for an open hardware ecosystem of the Harmony system, provide hardware capability abstraction for hardware upward, and provide development frameworks and running environments for various peripheral drivers downward.

A hardware service subsystem set provides a common and adaptive hardware service for the Harmony system, and includes hardware service subsystems such as a pan-sensor service, a position service, a power supply service, a USB service, and a biometric service. The hardware service subsystem set can be based on deployment environments of different device forms. Each subsystem may be tailored at a granularity of a function.

A dedicated hardware service subsystem provides differentiated hardware services for different devices in the Harmony system, and optionally includes subsystems such as a tablet dedicated hardware service, a head unit dedicated hardware service, a wearable dedicated hardware service, and an IoT dedicated hardware service. The dedicated hardware service subsystem may be tailored at a granularity of a subsystem. Each subsystem may be tailored at a granularity of a function.

The framework layer provides, for applications of the Harmony system, multi-language user program frameworks and meta-capability frameworks such as Java, C, C++, and JavaScript, as well as open multi-language framework APIs for various software and hardware services. The application layer includes a system application and a third-party application, and may include applications such as Camera, Gallery, Calendar, Phone, Map, Navigation, WLAN, Bluetooth, Music, Video, and Messages. The applications of the Harmony system construct an application based on a meta-service PA and FA.

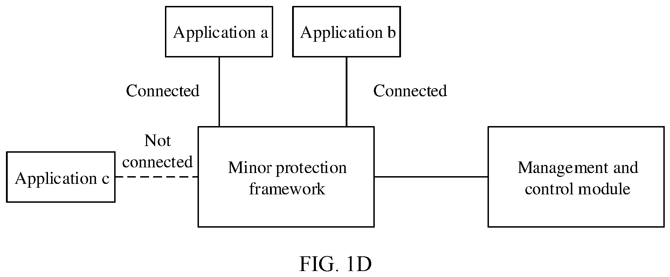

FIG. 1D is another software block diagram of an electronic device according to an embodiment of this application. As shown in FIG. 1D, the electronic device includes a minor protection framework, a management and control module, and a plurality of applications (namely, an application a, an application b, and an application c). The management and control module is connected to the minor protection framework, the application a and the application b are applications that are connected to the minor protection framework, and the application c is an application that is not connected to the minor protection framework.

For example, the minor protection framework may be included in the application framework layer in FIG. 1B, or may be included in the framework layer in FIG. 1C. The minor protection framework may globally manage a youth protection mode, for example, manage whether to enable the youth protection mode, and manage which applications require the youth protection mode to be enabled. The minor protection framework includes a status query interface, a status operation interface, a password verification interface, and an age information query interface, in which:

The status query interface provides a capability of querying a state of the youth protection mode, that is, querying whether the minor protection framework enables the youth protection mode.

The status operation interface is used to enable or disable a minor protection mode.

The password verification interface is used to verify user permission. Based on the password verification interface, the user needs to perform identity verification only once to manage the youth protection mode for a plurality of applications, for example, enabling or disabling the youth protection mode for the plurality of applications.

The age information query interface is used to query age information of a user who uses the youth protection mode, and/or query age information applicable to an application that can run in the youth protection mode.

It may be understood that the interfaces included in the foregoing minor protection framework are merely an example. In some embodiments, the minor protection framework may further include an application management interface that is configured to exchange information with an application. This is not limited in embodiments of this application.

The management and control module, in conjunction with the minor protection framework, manages and controls an application (such as the application c) that is not connected to the minor protection framework. For example, the management and control module may query age information from the minor protection framework, for example, query age information of a user and age information applicable to an application through the age query interface of the minor protection framework.

For example, the application a is connected to the minor protection framework. The application a may send a message (for example, a message 1) to the minor protection framework, to indicate that the application a has a capability of running in the youth protection mode. When receiving the message 1, the minor protection framework may perform unified management on the application a. An occasion at which the application a sends the message 1 to the minor protection framework may be a time at which the application a is installed, or may be a time at which the application a is started for the first time, or may be another time. This is not limited in embodiments of this application.

Optionally, the message 1 may further include an identifier of the application a, for example, a package name of the application a, or may be a name of the application a. When receiving the message 1, the minor protection framework may include the identifier of the application a. Optionally, the minor protection framework may further add an identifier to the application a to indicate that the application a has a capability to run in minor mode.

For ease of understanding, in the following embodiments of this application, an electronic device having the structure shown in FIG. 1A to FIG. 1D is used as an example to describe an application management method provided in embodiments of this application with reference to the accompanying drawings. The following describes an implementation process of the technical solutions of this application by using different application scenarios. In the following description process, a mobile phone is used as an example of the electronic device.

### Scenario 1 - Managing a youth protection mode based on a currently running application

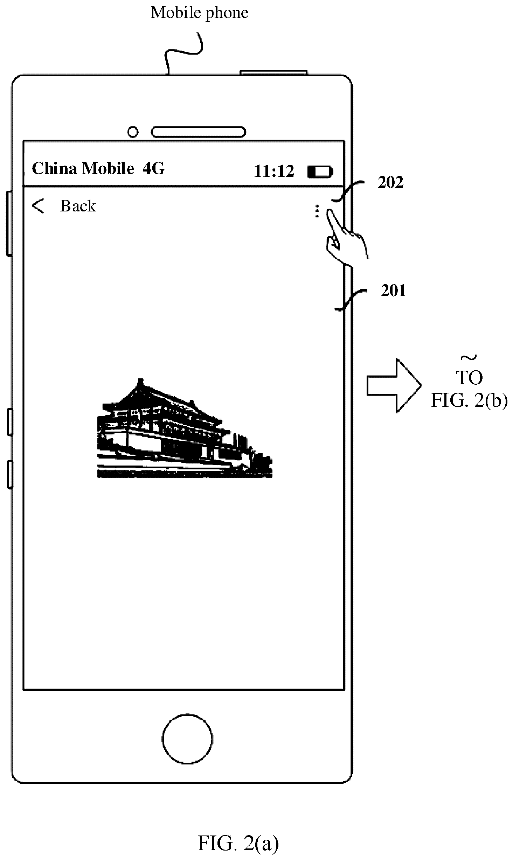

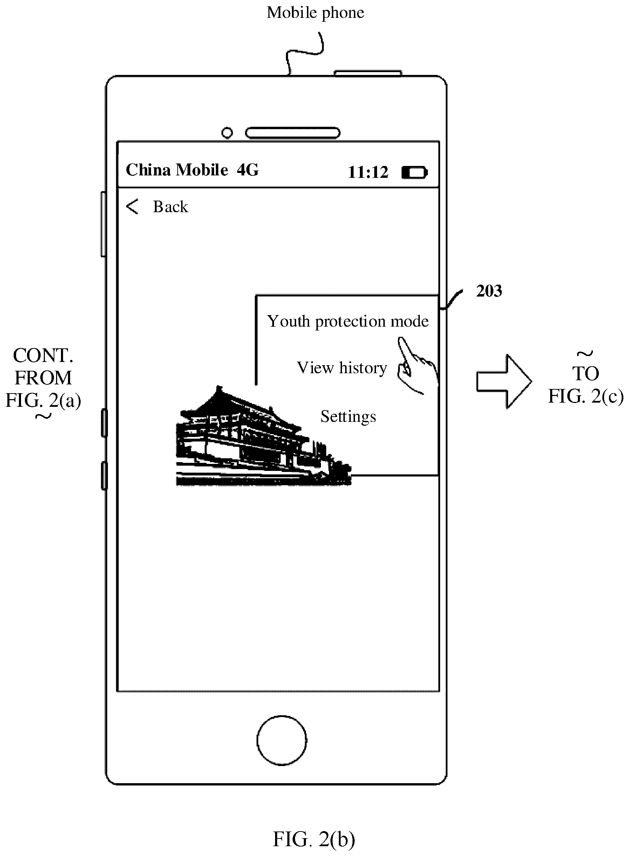

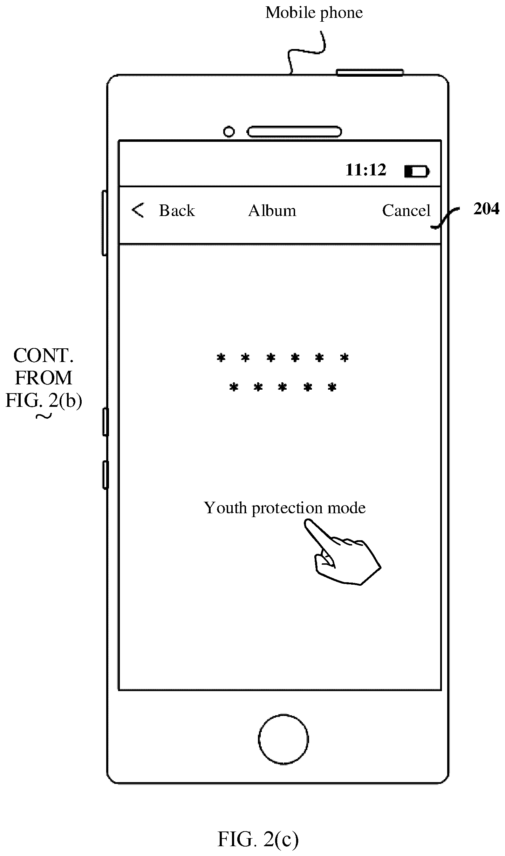

For example, the currently running application is a short video application. Refer to FIG. 2(a). The mobile phone displays an interface 201 of the short video application, and the interface 201 includes a control 202. When detecting that the control 202 is triggered, the mobile phone may display an interface 203 shown in FIG. 2(b). When detecting an operation of triggering a youth protection mode by a user on the interface 203, the mobile phone may display an interface 204 shown in FIG. 2(c), and the user may trigger, based on the interface 204, enabling or disabling of the youth protection mode. When detecting an operation of triggering enabling or disabling of the youth protection mode, the mobile phone may enable or disable the youth protection mode for a plurality of applications, where the plurality of applications include the short video application and an application that runs in a background and that is capable of running in the youth protection mode.

For example, the mobile phone detects the operation of triggering enabling of the youth protection mode. The mobile phone may run the short video application in the youth protection mode. When the user switches the application (for example, a game application) capable of running in the youth protection mode from running in the background to running in a foreground, the mobile phone runs the game application in the youth protection mode.

In Scenario 1, when detecting the operation of enabling the youth protection mode based on the short video application, the mobile phone may run the running short video application in the youth protection mode. In addition, when another application capable of running in the youth protection mode is switched to the foreground for running, the mobile phone may directly run the another application in the youth protection mode. The user does not need to enable the youth protection mode for the another application again. To be specific, the user may enable the youth protection mode for the plurality of applications by performing a single operation of enabling the youth protection mode. This helps improve efficiency in enabling the youth protection mode, thereby improving application management and control efficiency and improving user experience.

### Scenario 2: Managing a youth protection mode based on settings

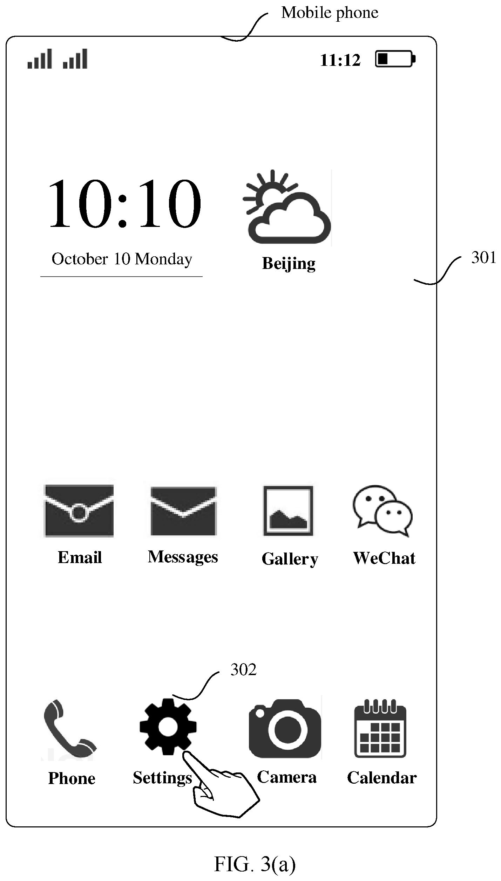

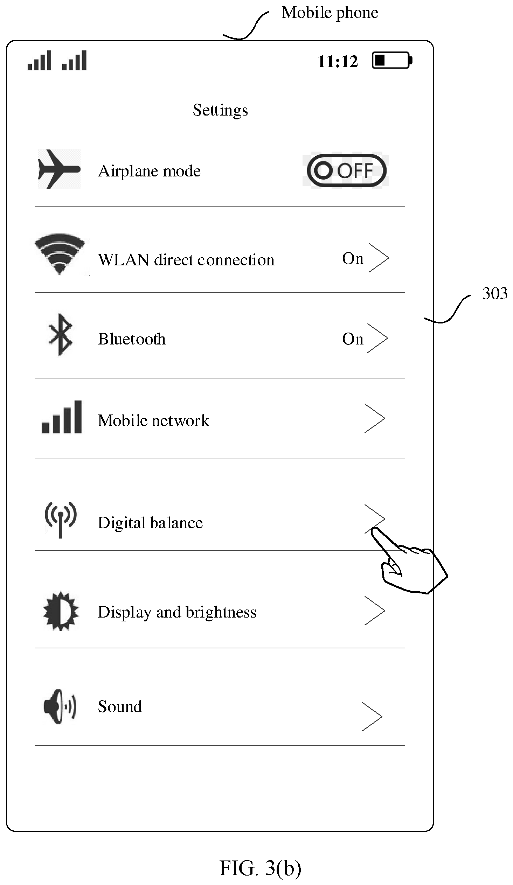

Refer to FIG. 3(a). The mobile phone displays a home screen 301, and the home screen 301 includes application icons of a plurality of applications (Camera, Gallery, Calendar, Settings, and the like). When enabling or disabling the youth protection mode, the user may tap an application icon 302 of Settings on the home screen 301. When detecting an operation of triggering the application icon 302 of Settings by the user, the mobile phone may display an interface 303 shown in FIG. 3(b).

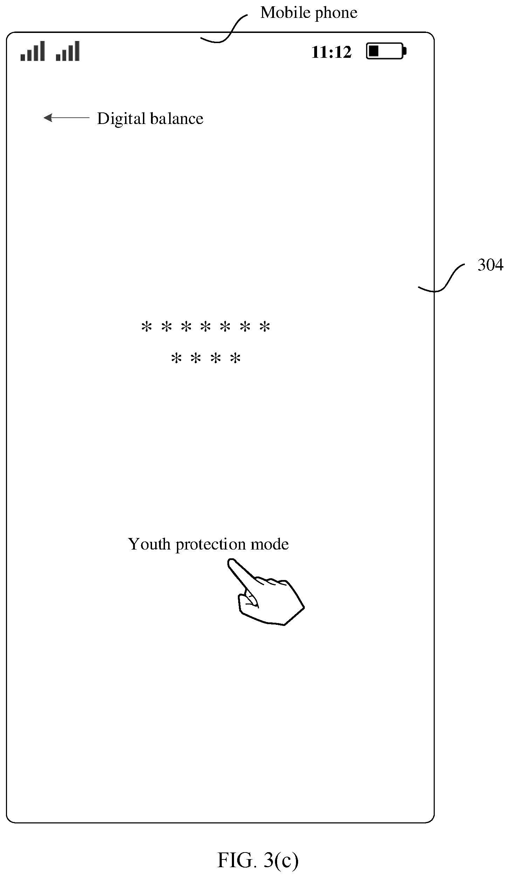

When detecting an operation of triggering digital balance on the interface 303 by the user, the mobile phone may display an interface 304 shown in FIG. 3(c), and the user may enable or disable the youth protection mode based on the interface 304. When detecting an operation of triggering enabling or disabling of the youth protection mode, the mobile phone may enable or disable the youth protection mode for one or more applications, where the one or more applications include the plurality of application that runs in the background and that is capable of running in the youth protection mode.

For example, the mobile phone detects the operation of triggering enabling of the youth protection mode. When the user exits Settings and switches the application (for example, a game application) capable of running in the youth protection mode from running in the background to running in a foreground, the mobile phone runs the game application in the youth protection mode.

In Scenario 2, the user may enable or disable the youth protection mode for the plurality of applications in a unified manner through the setting application, so that when switched to the foreground, the plurality of applications can run in the youth protection mode, instead of simply setting usage duration or a usage time period of the mobile phone. This can more reasonably manage and control minors' use of the electronic device.

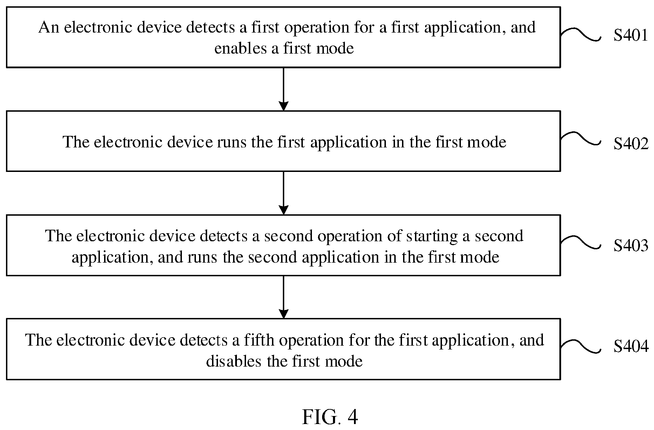

As described above, in embodiments of this application, the youth protection mode may be enabled for the plurality of applications through Settings or the currently running application. Refer to FIG. 4. The following describes an application management method provided in an embodiment of this application. The method may be implemented by using the electronic device shown in FIG. 1A or another electronic device. The embodiment shown in FIG. 4 is described by using the foregoing Scenario 1 as an example.

S401: The electronic device detects a first operation for a first application, and enables the first mode.

The first application may be the short video application in Scenario 1, or may be another application that is installed on the electronic device and that has a capability of running in the first mode. The first application is an application that is running in a foreground of the electronic device.

The first mode may include a youth protection mode. The "youth protection mode" is merely an example of this embodiment of this application. During actual application, another name may be used, for example, a "youth mode", a "minor mode", or a "minor protection mode". This is not limited in embodiments of this application.

The first operation for the first application may be, for example, an operation of triggering enabling of the youth protection mode by the user on the interface 204 in Scenario 1. Optionally, the operation of enabling the youth protection mode by the user may be, for example, an operation of triggering an on/off button corresponding to the youth protection mode by the user, or may be that the user triggers "enabling the youth protection mode". For example, when detecting an operation of triggering the youth protection mode by the user on the interface 203, the mobile phone may determine a state of the youth protection mode. If the state of the youth protection mode is a disabled state (or an off state), the mobile phone may display a control of "enabling the youth protection mode" on the interface 204.

Optionally, the electronic device may enable the first mode through the minor protection framework shown in FIG. 1D. When detecting the first operation for the first application, the electronic device may send a message (for example, a message 1) to the minor protection framework through the first application, to indicate to enable the first mode. When receiving the message 1, the minor protection framework may enable the first mode, for example, set a state of the first mode to an enabled state.

Optionally, content that teenagers of different age groups may watch varies. For example, content that a child under 6 years of age may watch is different from content that a teenager over 14 years of age may watch. Therefore, when the application runs in the first mode, the content displayed by the application may be further related to an age of a teenager. The teenager is a user (for example, a first user) who uses the electronic device when the first mode is enabled.

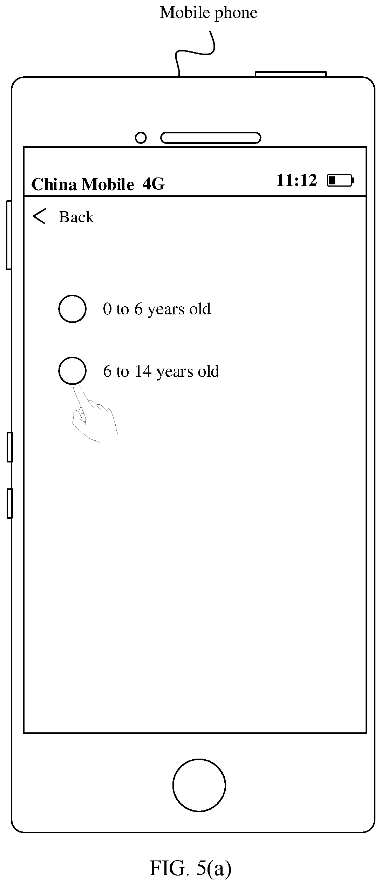

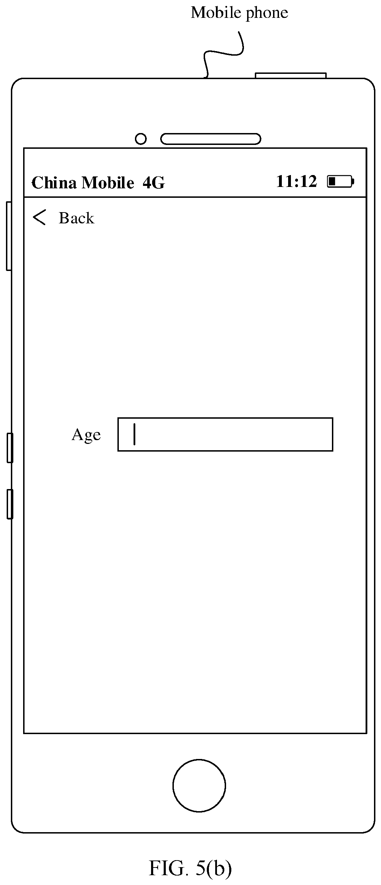

For example, the electronic device is a mobile phone. When detecting the first operation for the first application, the mobile phone may display an interface shown in FIG. 5(a), and the user (a user performing the first operation) may select, based on FIG. 5(a), an age group to which the youth belongs. Alternatively, the mobile phone may display an interface shown in FIG. 5(b), and the user may input an age of the youth based on the interface shown in FIG. 5(b). Alternatively, the mobile phone may display an interface shown in FIG. 5(c), and the user may select the first user from at least one user based on FIG. 5(c). If the mobile phone displays the interface shown in FIG. 5(c) when the mobile phone detects the first operation for the first application, before S401 is performed, the user may further pre-create account information of the first user, where the account information includes, for example, at least a nickname of the first user and an age of the first user.

Optionally, the electronic device may send the age information to the minor protection framework through the first application, for example, may include the age information in the message 1 that is sent by the first application to the minor protection framework and that indicates to enable the first mode.

After setting the state of the first mode to the enabled state, the minor protection framework may notify the first application to run in the first mode. For example, the minor protection framework may send a first message to the first application, and notify, by using the first message, the first application to run in the first mode. Alternatively, the first message may further include a first identifier, and the minor protection framework may notify, by using the first identifier, the first application to run in the first mode. The first message may be, for example, a broadcast message. Optionally, the first message may further include the foregoing age information, that is, the age of the first user. When receiving the first message from the minor protection framework, the first application may enable the first mode based on the first message, and perform S402.

S402: The electronic device runs the first application in the first mode.

When the electronic device runs the first application in the first mode, content displayed on an interface of the first application is related to the first mode. The content displayed on the interface of the first application may be content that is recommended by an application server of the first application and that is suitable for a teenager to watch. For example, the first application is a short video application. Content displayed on an interface of the short video application is a video that is recommended by an application server of the short video application and that is suitable for a teenager to watch, for example, a video on an invention, a scientific experiment, or the like that is beneficial to healthy development of the teenager. Therefore, before running the first application in the first mode, the electronic device may further send a request message to the application server of the first application, to request the application server to recommend the content suitable for the teenager to watch.

In addition, when running the first application in the first mode, the electronic device may further monitor usage duration of the first application, and exit a running state of the first application when an allowable usage duration of the first application ends, without responding to an operation of restarting the first application.

Optionally, if the broadcast message in S401 includes the age of the first user, when the electronic device runs the first application in the first mode, the content displayed on the interface of the first application and/or the allowable usage duration of the first application may be further related to the age of the first user.

S403: The electronic device detects a second operation of starting a second application, and runs the second application in the first mode.

Optionally, the second application may be an application that runs in a background of the electronic device when the first mode is enabled. Alternatively, the second application may be an application that is not started when the first mode is enabled, and the second application has a capability of running in the first mode. Therefore, the second operation of starting the second application may be an operation of switching the application running in the background to running in a foreground, or may be an operation of starting the application.

Before running the second application in the first mode, the electronic device may further notify the second application to run in the first mode. For example, the electronic device may send the first message to the second application through the minor protection framework shown in FIG. 1D, to notify the second application to run in the first mode. If the second application is the application that runs in the background of the electronic device when the first mode is enabled, an occasion at which the minor protection framework sends the first message to the second application may be the same as the occasion at which the minor protection framework sends the first message to the first application in S401. In other words, when enabling the first mode, the minor protection framework may send the first message to the application that runs in the foreground (that is, the first application) and the application that runs in the background.

If the second application is the application that is not started when the first mode is enabled, an occasion at which the minor protection framework sends the first message to the second application may be after receiving a second message from the second application. The second message is used to query whether to run the second application in the first mode. For example, when detecting the second operation of starting the second application, the electronic device may send the second message to the minor protection framework through the second application. When receiving the second message, the minor protection framework may determine the state of the first mode. If the state of the first mode is the enabled state, the minor protection framework may send the first message to the second application. Optionally, after receiving the second message, if the minor protection framework determines that the state of the minor protection mode is a disabled state, the minor protection framework may send indication information indicating that the first mode is disabled to the second application. When detecting the second operation, the electronic device may directly run the second application in the first mode, and the user does not need to enable the first mode for the second application again. This helps improve efficiency in enabling the minor mode.

When receiving the first message, the second application may enable the first mode, and the electronic device may run the second application in the first mode. For related descriptions in which the electronic device runs the second application in the first mode, refer to the related descriptions in which the electronic device runs the first application in the first mode in S402. Details are not described herein again. It may be understood that in this embodiment of this application, when different applications run in the first mode, corresponding allowable usage duration may be different, and allowable usage duration of each application may be separately managed. The first application and the second application are used as examples. In the first mode, allowable usage duration of the first application is 30 minutes, and allowable usage duration of the second application is one hour. In this case, when the usage duration of the first application ends, the second application still has the usage duration of one hour.

An application (for example, a third application) that is not connected to the minor protection framework shown in FIG. 1D may be further installed in the electronic device, for example, the application c shown in FIG. 1D. However, the application may be an application that is forbidden to be used by a teenager, for example, a large-scale online game. Applicable age information of the application is set to be greater than or equal to 18 years of age during development, and is not suitable for a teenager to use. Therefore, the application needs to be managed. For example, for the third application that is not connected to the minor protection framework, the electronic device may manage the third application through the minor protection framework and the management and control module shown in FIG. 1D.

Optionally, after the first mode is enabled, the electronic device may determine an attribute of the third application, and manage and control the third application based on the attribute. The attribute of the third application may include, for example, an applicable age of the third application and an application type to which the third application belongs. The application type may include, for example, video entertainment, learning, gaming, and the like.

For example, the electronic device manages the third application through the minor protection framework and the management and control module shown in FIG. 1D. After enabling the first mode, the minor protection framework may further enable the management and control module. The management and control module may obtain, from an application market, all applications currently installed on the electronic device, and query a management and control policy of each application, for example, query whether the application is connected to the minor protection framework, or query whether an attribute of the application matches the first user. The management and control module querying the management and control policy of the application from the minor protection framework may be, for example, sending a first query message to the minor protection framework. The first query message may include an identifier of a to-be-queried application.

When receiving the first query message, the minor protection framework may determine whether the to-be-queried application has been connected. For an application that has been connected to the minor protection framework, for example, the first application and the second application, the minor protection framework may reply to the management and control module with a first response message indicating that the application has been connected. In this case, the management and control mode may not manage and control the application. For an application that is not connected to the minor protection framework, for example, the third application, the minor protection framework may query an application label of the third application, obtain the attribute of the third application, determine a management and control policy of the third application based on the attribute, and send the management and control policy to the management and control module. The management and control module may manage and control the third application based on the management and control policy.

The third application is used as an example. If the attribute of the third application indicates that the applicable age of the third application is greater than or equal to 18 years of age, and the age of the first user is 9, it indicates that the attribute of the third application does not match the first user. In this case, the management and control policy determined by the minor protection framework may be that the first user is not allowed to use the third application, and the minor protection framework may reply to the management and control module with a first response message indicating that the third application is not allowed to be used. When receiving the first response message, the management and control module may manage and control the third application based on the management and control policy. If the attribute of the third application indicates that the applicable age of the third application is greater than or equal to 6 years of age, and the age of the first user is 9, it indicates that the attribute of the third application matches the first user. In this case, the management and control policy determined by the minor protection framework may be that the first user is allowed to use the third application, and the minor protection framework may reply to the management and control module with a first response message indicating that the third application is allowed to be used. When receiving the first response message, the management and control module may manage and control the third application based on the management and control policy.

If the management and control module determines that the first user is not allowed to use the third application, the management and control module may set a state of the third application to unavailable. For example, the management and control module may display an application icon of the third application in gray. Alternatively, if the management and control module determines that the first user is allowed to use the third application, the management and control module may set a state of the third application to available.

When the third application is set to unavailable, if the third application is an application running in a background, the management and control module controls the third application to exit running in the background. Alternatively, if the third application is an application that is not started when the first mode is enabled, when detecting an operation of starting the third application, the electronic device does not respond to the operation.

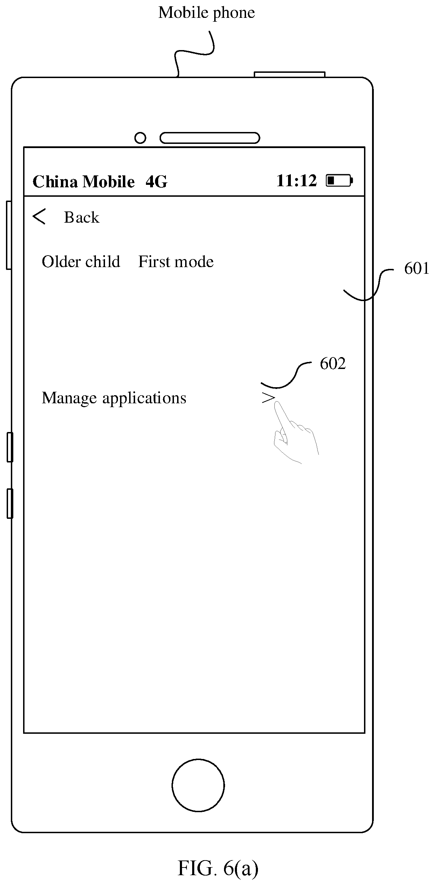

For example, the electronic device is a mobile phone. In some embodiments, after the electronic device enables the first mode, an interface of a setting application may display the first mode. For example, refer to an interface 601 shown in FIG. 6(a).

Optionally, when the user wants to view or manage an application, the user may further trigger a control 602 on the interface 601. When detecting an operation (for example, a third operation) of triggering the control 602 by the user, the mobile phone may display an interface 603 shown in FIG. 6(b). The interface 603 includes an application list, and the application list includes at least one application. The at least one application includes the first application and the second application.

Optionally, the at least one application may further include the third application. Alternatively, the third application may be displayed on another interface. The another interface displays a list of managed applications that are not connected to the minor protection framework. This is not shown in the figure. In the following embodiment, for example, the third application is displayed on the interface 603.

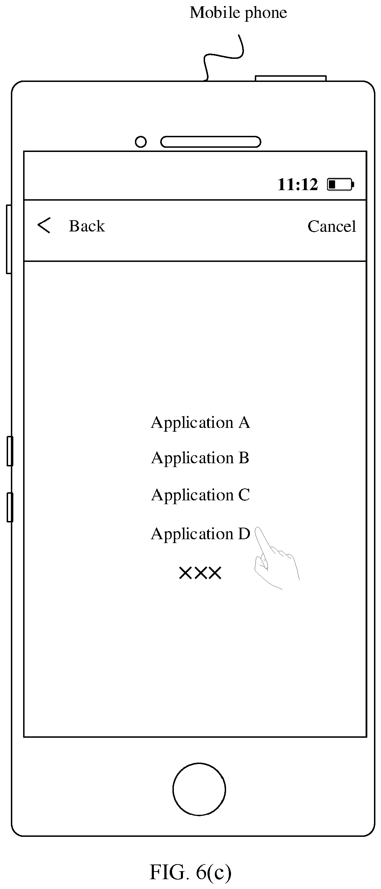

Optionally, the interface 603 may further include a control 604 used to delete an application and a control 605 used to add an application. When detecting an operation of triggering the control 604, the mobile phone may delete a corresponding application from the application list. For example, when detecting an operation of triggering the control 604 corresponding to a fourth application, the mobile phone may delete the fourth application from the application list. When detecting an operation of triggering a control 605, the mobile phone may display an interface shown in FIG. 6(c), and the user may select an application to be added. When detecting an operation of selecting an application by the user, the mobile phone may add a selected application (for example, a fifth application) to the application list. The plurality of applications shown in FIG. 6(c) may be applications that have been connected to the minor protection framework, for example, applications that have been connected to the minor protection framework and that are previously deleted by the user, or may be applications that are not connected to the minor protection framework. This is not limited in embodiments of this application.

S404: The electronic device detects a fifth operation for the first application, and disables the first mode.

The electronic device may respond to an operation (for example, the fifth operation) of disabling the first mode. The fifth operation is for an application that is currently running in the first mode and that is of the electronic device, and the application that is currently running in the first mode may be, for example, the first application or the second application. In this embodiment of this application, an example in which the electronic device runs the first application in the first mode is used. If the fifth operation of disabling the first mode for the first application by a user (for example, a second user) is detected, before disabling the first mode, the electronic device may start a verification process to perform identity verification on the second user. If the verification succeeds, the electronic device may disable the first mode, for example, set the state of the first mode to the disabled state. If the verification fails, the first mode is kept enabled.

For example, when detecting the fifth operation for the first application, the electronic device may send a message 2 to the minor protection framework through the first application, to indicate to disable the first mode. When receiving the message 2, the minor protection framework may start a verification process, collect verification information used to verify an identity of the second user, and verify the collected verification information. For example, the electronic device may collect the verification information through the password verification interface shown in FIG. 1D, and verify the verification information. The verification information may be, for example, information that can be used for identity authentication, such as fingerprint information, password information, face information, palm print information, or iris information.

Alternatively, when detecting the fifth operation for the first application, the electronic device may send, through the first application, a message 2 to the minor protection framework, and a message 3 to the setting application, to indicate the setting application to start an identity verification process. When receiving the message 3, the setting application collects verification information, and sends the verification information to the minor protection framework through the password verification interface, and the minor protection framework verifies the verification information.

After setting the state of the first mode to the disabled state, the minor protection framework may notify the first application running in the foreground and the application running in the background to disable the first mode. For example, the minor protection framework may send a third message to the first application, and notify, by using the third message, the first application to disable the first mode, for example, notify the first application to run in a second mode. The second mode is a non-youth protection mode, and the third message may be, for example, a broadcast message. Optionally, the third message may further include a second identifier, and notify the first application to disable the first mode through the second identifier.

The third message and the foregoing first message may be a same message, or may be different messages. For example, the first message and the third message are sent to the first application. When the first application is indicated to run in the first mode or the second mode through messages, the first message and the third message are different messages. Alternatively, when the first application is indicated to run in the first mode or the second mode through an identifier, the first message and the third message may be a same message. This is not limited in embodiments of this application.

When detecting the second operation of starting the second application, the electronic device runs the second application in the second mode. If the second application is an application that runs in the background of the electronic device when the first mode is disabled, the minor protection framework may send the third message to the second application before running in the second mode. An occasion at which the minor protection framework sends the third message to the second application may be the same as the occasion at which the minor protection framework sends the third message to the first application.

If the second application is an application that is not started when the first mode is disabled, the minor protection framework may not send the third message to the second application. After receiving the second message from the second application, the minor protection framework may send indication information indicating that the first mode is not enabled to the second application.

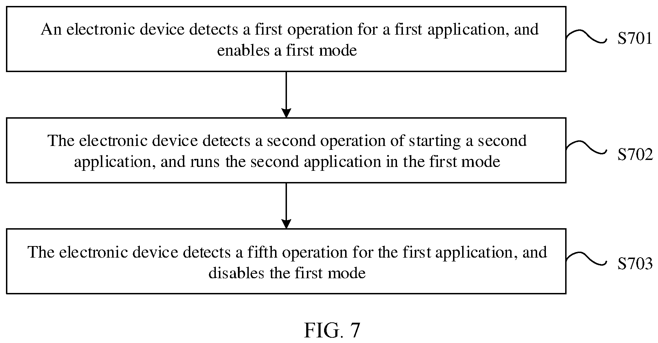

Refer to FIG. 7. The following describes another application management method according to an embodiment of this application. The method may be implemented by using the electronic device shown in FIG. 1A or another electronic device. The embodiment shown in FIG. 7 is described by using the foregoing Scenario 2 as an example.

S701: The electronic device detects a first operation for a first application, and enables a first mode.

The first application is a setting application. The first operation for the first application may be, for example, an operation of triggering enabling of the youth protection mode by the user on the interface 304 in Scenario 2. Optionally, the operation of enabling the youth protection mode by the user may be, for example, an operation of triggering an on/off button corresponding to the youth protection mode by the user, or may be that the user triggers "enabling the youth protection mode". For example, when detecting an operation of triggering digital balance by the user on the interface 303, the mobile phone may determine a state of the youth protection mode. If the state of the youth protection mode is a disabled state (or an off state), the mobile phone may display a control of "enabling the youth protection mode" on the interface 304.

Optionally, the electronic device may enable the first mode through the minor protection framework shown in FIG. 1D. When detecting the first operation for the first application, the electronic device may send the message 1 in S401 to the minor protection framework through the first application, to indicate to enable the first mode. When receiving the message 1, the minor protection framework may enable the first mode.

Optionally, the message 1 may further include the age of the first user and/or the first identifier in S401. For a manner in which the electronic device determines the age of the first user, refer to the related descriptions in S401 that are corresponding to FIG. 5(a) to FIG. 5(c). Details are not described herein again.

S702: Detect a second operation of starting a second application, and run the second application in the first mode.

For related descriptions of S702, refer to the related descriptions in S403. Details are not described herein again.

S703: The electronic device detects a fifth operation for the first application, and disables the first mode.

The electronic device may respond to the fifth operation of disabling the first mode. The fifth operation is for an application that is currently running in the first mode and that is of the electronic device, and the application that is currently running in the first mode may be, for example, the first application or the second application. In this embodiment of this application, an example in which the electronic device runs the first application in the first mode is used. If an operation of disabling the first mode for the first application by a user (for example, the second user) is detected, before disabling the first mode, the electronic device may start a verification process to perform identity verification on the second user. If verification succeeds, the electronic device may disable the first mode, for example, set a state of the first mode to a disabled state. If the verification fails, the first mode is kept enabled. For example, when detecting the fifth operation for the first application, the electronic device may send a message 2 to the minor protection framework through the first application, to indicate to disable the first mode. When receiving the message 2, the minor protection framework may start a verification process, collect verification information used to verify an identity of the second user, and verify the collected verification information. For example, the electronic device may collect the verification information through the password verification interface shown in FIG. 1D, and verify the verification information. For the verification information, refer to the verification information in S404. Details are not described herein again.

Optionally, the first application may send a message (for example, a message 3) indicating to disable the first mode to the minor protection framework, start an identity verification process, collect the verification information used by the second user for identity verification, and send the verification information to the minor protection framework through the password verification interface, and the minor protection framework verifies the verification information.

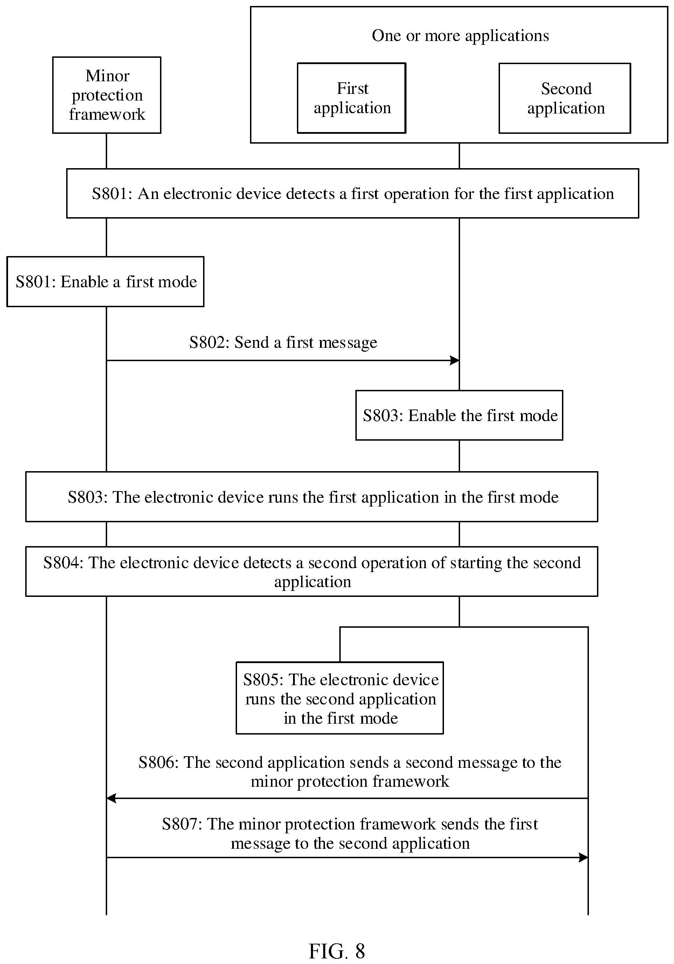

The following describes several embodiments by using FIG. 8 to FIG. 10. The several embodiments are several examples of the application management method described in the embodiment shown in FIG. 4.

FIG. 8 is a flowchart of an example of the application management method according to the embodiment shown in FIG. 4. In FIG. 8, for example, a first mode is enabled.

S801: An electronic device detects a first operation for a first application, and a minor protection framework enables the first mode.

For related descriptions of S801, refer to the related descriptions of the first application in S401. Details are not described herein again.

S802: The minor protection framework sends a first message to one or more applications that are connected. Correspondingly, the one or more applications receive the first message.

The one or more applications include the first application running in a foreground and the one or more applications running in a background. For related descriptions in which the minor protection framework sends the first message to the first application, refer to the related descriptions in which the minor protection framework sends the first message to the first application in S401. In addition, for related descriptions in which the minor protection framework sends the first message to the one or more applications running in the background, refer to the related descriptions in which the minor protection framework sends the first message to the second application when the second application is an application that is not started when the first mode is enabled in S403. Details are not described herein again.

S803: The one or more applications enable the first mode, and the electronic device runs the first application in the first mode.

For related descriptions in which the electronic device runs the first application in the first mode, refer to the related descriptions in S402. Details are not described herein again.

S804: The electronic device detects a second operation of starting a second application.

For related descriptions of the second application, refer to the related descriptions of the second application in S403. Details are not described herein again. If the second application is an application that runs in the background of the electronic device when the first mode is enabled, S805 may be performed. If the second application is the application that is not started when the first mode is enabled, S806, S807, and S805 may be sequentially performed.

S805: The electronic device runs the second application in the first mode.

For related descriptions of S805, refer to the related descriptions in which the electronic device run the second application in the first mode in S403. Details are not described herein again.

S806: The second application sends a second message to the minor protection framework. Correspondingly, the minor protection framework receives the second message.

For related descriptions of S806, refer to the related descriptions in which the electronic device sends the second message to the minor protection framework through the second application in S403. Details are not described herein again.

S807: The minor protection framework sends the first message to the second application. Correspondingly, the second application receives the second message.

For related descriptions of S807, refer to the related descriptions in which the second application is the application that is not started when the first mode is enabled, and the minor protection framework sends the first message to the second application in S403. Details are not described herein again.

In the foregoing technical solution, when detecting the second operation, the electronic device may directly run the second application in the first mode, and the user does not need to enable the first mode for the second application again. This helps improve efficiency in enabling the minor mode.

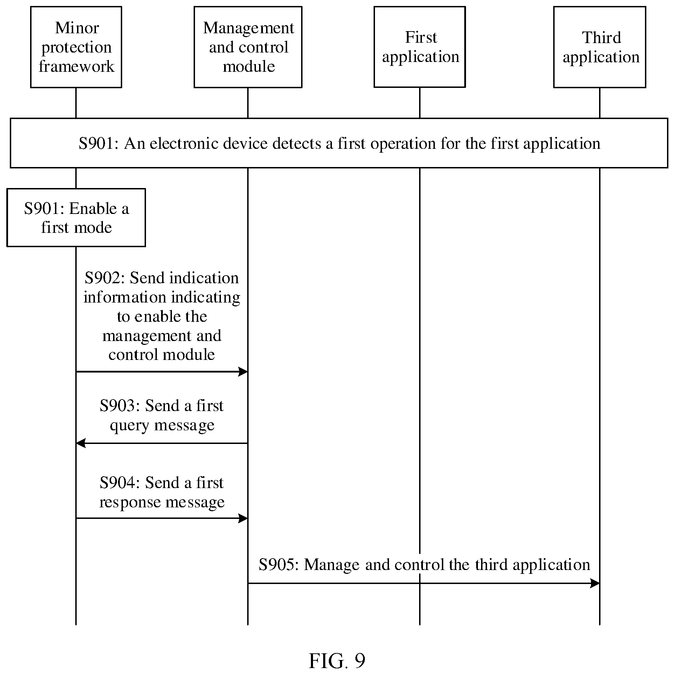

FIG. 9 is a flowchart of another example of the application management method according to the embodiment shown in FIG. 4. In FIG. 9, for example, a first mode is enabled.

S901: An electronic device detects a first operation for a first application, and a minor protection framework enables the first mode.

For related descriptions of S901, refer to the related descriptions of the first application in S401. Details are not described herein again.

S902: The minor protection framework sends indication information indicating to enable the management and control module to a management and control module.

S903: The management and control module sends a first query message to the minor protection framework. Correspondingly, the minor protection framework receives the first query message.

The management and control module may obtain, from an application market, all applications currently installed on the electronic device, and send the first query message to the minor protection framework to query a management and control policy of each application, for example, query whether the application is connected to the minor protection framework, or query whether an attribute of the application matches a first user. The management and control module querying the management and control policy of the application from the minor protection framework may be, for example, sending a first query message to the minor protection framework. The first query message may include an identifier of a to-be-queried application.

S904: The minor protection module sends a first response message to the management and control module. Correspondingly, the management and control module receives the first response message.

When receiving the first query message, the minor protection framework may determine whether the to-be-queried application has been connected. For an application that has been connected to the minor protection framework, for example, the first application, the minor protection framework may reply to the management and control module with the first response message indicating that the application has been connected. In this case, the management and control mode may not manage and control the application. For an application that is not connected to the minor protection framework, for example, the third application, the minor protection framework may query an application label of the third application, obtain an attribute of the third application, determine a management and control policy of the third application based on the attribute, and send the management and control policy to the management and control module. S905 is performed.

S905: The management and control module manages and controls the third application based on the first response message.

The third application is used as an example. If the management and control module determines that the first user is not allowed to use the third application, the management and control module may set a state of the third application to unavailable. For example, the management and control module may display an application icon of the third application in gray. Alternatively, if the management and control module determines that the first user is allowed to use the third application, the management and control module may set a state of the third application to available.

When the third application is set to unavailable, if the third application is an application running in a background, the management and control module controls the third application to exit running in the background. Alternatively, if the third application is an application that is not started when the first mode is enabled, when detecting an operation of starting the third application, the electronic device does not respond to the operation.

In the foregoing technical solution, for the application that is not connected to the minor protection framework, the minor protection framework may manage a use state of the application in combination with the management and control module, thereby helping improve rationality of application management.

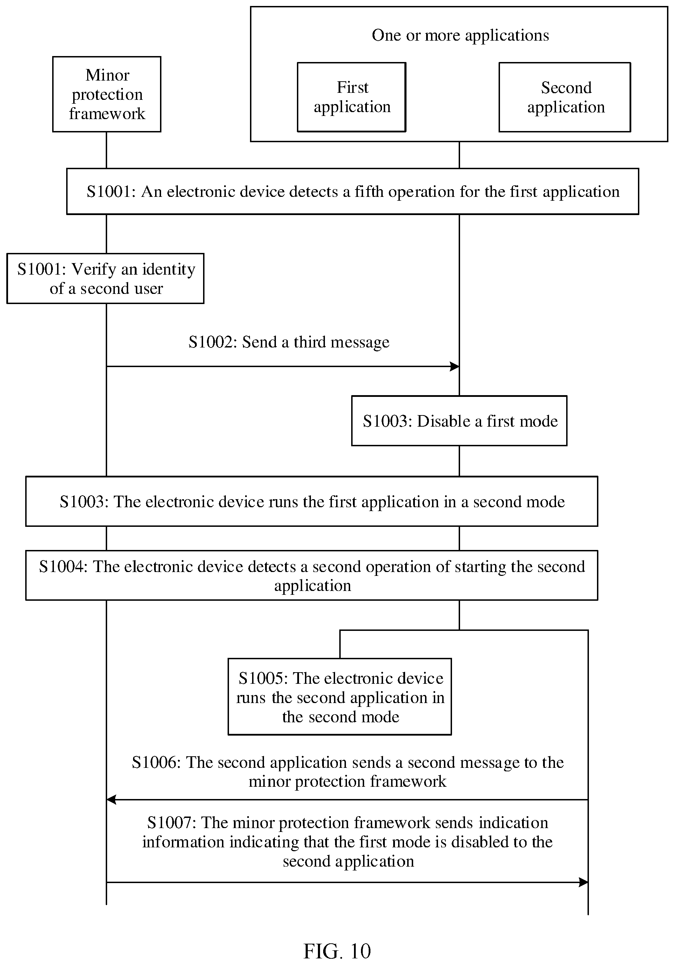

FIG. 10 is a flowchart of still another example of the application management method according to the embodiment shown in FIG. 4. In FIG. 10, for example, a first mode is disabled.

S1001: An electronic device detects a fifth operation for a first application, and a minor protection framework verifies an identity of a second user.

When the electronic device runs the first application in the first mode, if the fifth operation for the first application by the second user is detected, the minor protection framework may start a verification process to perform identity verification on the second user.

Alternatively, when detecting the fifth operation for the first application, the electronic device may send, through the first application, a message 2 to the minor protection framework, and a message 3 to a setting application, to indicate the setting application to start an identity verification process. When receiving the message 3, the setting application collects verification information, and sends the verification information to the minor protection framework through a password verification interface, and the minor protection framework verifies the verification information.

Optionally, if the electronic device detects the fifth operation for the setting application by a user, the setting application may send a message (for example, the message 3) indicating to disable the first mode to the minor protection framework, start the identity verification process, collect the verification information used by the second user for identity verification, and send the verification information to the minor protection framework through the password verification interface, and the minor protection framework verifies the verification information.

If verification succeeds, the first mode is disabled, for example, a state of the first mode is set to a disabled state, and S1002 is performed. If the verification fails, the first mode is kept enabled.

S1002: The minor protection framework sends a third message to one or more applications. Correspondingly, the one or more applications receive the third message.

The one or more applications include the first application running in the foreground and one or more applications running in a background. For related descriptions in which the minor protection framework sends the third message to the first application, refer to the related descriptions in which the minor protection framework sends the third message to the first application in S403. In addition, for related descriptions in which the minor protection framework sends the first message to the one or more applications running in the background, refer to the related descriptions in which the minor protection framework sends the third message to the second application when the second application is an application that is not started when the first mode is disabled in S403. Details are not described herein again.

S1003: The one or more applications disable the first mode, and the minor protection framework runs the first application in a second mode.

For related descriptions in which the minor protection framework runs the first application in the second mode, refer to the related descriptions in which the minor protection framework runs the first application in the second mode in S403. Details are not described herein again.

S 1004: The electronic device detects a second operation of starting the second application.

For related descriptions of the second application, refer to the related descriptions of the second application in S403. Details are not described herein again. If the second application is an application that runs in the background of the electronic device when the first mode is disabled, S1005 may be performed. If the second application is an application that is not started when the first mode is enabled, S1006, S1007, and S1005 may be sequentially performed.

S1005: The electronic device runs the second application in the second mode.

For related descriptions of S1005, refer to the related descriptions in which the electronic device run the second application in the second mode in S403. Details are not described herein again.

S1006: The second application sends a second message to the minor protection framework. Correspondingly, the minor protection framework receives the second message.

For related descriptions of S 1006, refer to the related descriptions in which the electronic device sends the second message to the minor protection framework through the second application in S403. Details are not described herein again.

S 1007: The minor protection framework sends indication information indicating that the first mode is disabled to the second application. Correspondingly, the second application receives the indication information.

In the foregoing technical solution, when the user disables a first function, password verification needs to be performed only once, and password verification does not need to be performed for each application a plurality of times. This reduces an operation process of the user, and effectively improves efficiency in disabling the first function.

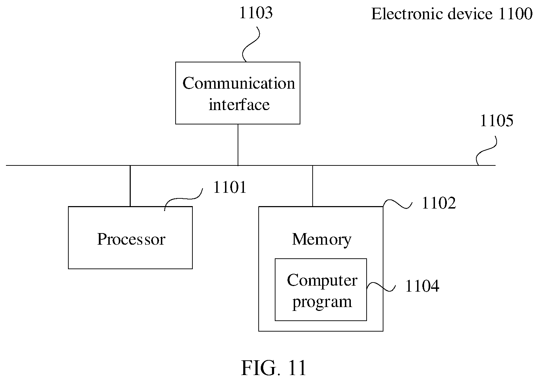

The following describes a diagram of a structure of an electronic device according to an embodiment of this application. Refer to FIG. 11. An electronic device 1100 may be the first apparatus or the second apparatus described above. The electronic device 1100 may include one or more processors 1101, one or more memories 1102, a communication interface 1103, and one or more computer programs 1104. The foregoing devices may be connected through one or more communication buses 1105. The one or more computer programs 1104 are stored in the memory 1102 and are configured to be executed by the one or more processors 1101, and the one or more computer programs 1104 include instructions. For example, the foregoing instructions may be used to perform related steps of the mobile phone in the foregoing corresponding embodiments. The communication interface 1103 is configured to implement communication between the mobile phone and another device (for example, an unmanned aerial vehicle). For example, the communication interface may be a transceiver.

An embodiment of this application further provides a computer program product, including a computer program. When the computer program is run on a computer, the computer is enabled to perform the method according to the foregoing embodiments.

An embodiment of this application further provides a graphical user interface on an electronic device. The electronic device has a display, a memory, and a processor. The processor is configured to execute one or more computer programs stored in the memory. The graphical user interface includes a graphical user interface displayed when the electronic device performs the method according to the foregoing embodiments.

An embodiment of this application further provides a chip system, including a processor and an interface. The processor is configured to invoke instructions from the interface and run the instructions, to enable the chip system to implement the method according to the foregoing embodiments.

In the foregoing embodiments provided in this application, the method provided in embodiments of this application is described from a perspective of an electronic device (the first apparatus or the second apparatus) serving as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

As used in the foregoing embodiments, according to the context, the term "when" may be interpreted as a meaning of "if" or "after". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the process or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage.

## Claims

1. An application management method, applied to an electronic device, wherein the method comprises:
running a first application;
detecting a first operation for the first application, and enabling a first mode, wherein the first mode comprises a youth protection mode;
running the first application in the first mode; and
detecting a second operation of starting a second application, and running the second application in the first mode.

2. The method according to claim 1, wherein before running the second application in the first mode, the method further comprises:
notifying the second application to run the second application in the first mode.

3. The method according to claim 2, wherein the second application is an application running in a background, or the second application is an application that is not started when the first mode is enabled.

4. The method according to claim 3, wherein the second application is the application that is not started when the first mode is enabled, and before notifying the second application to run the second application in the first mode, the method further comprises:
receiving a second message from the second application, wherein the second message is used to query whether to run in the first mode.

5. The method according to any one of claims 2 to 4, wherein notifying the second application to run the second application in the first mode comprises:
sending a first message to the second application, wherein the first message is used to notify the second application to run the second application in the first mode.

6. The method according to claim 5, wherein the first message comprises an age of a first user and/or a first identifier, the first user is a user who uses the electronic device after the first mode is enabled for running, and the first identifier indicates the second application to run the second application in the first mode.

7. The method according to any one of claims 1 to 6, wherein the method further comprises:
after the first mode is enabled, determining an attribute of a third application, and managing and controlling the third application based on the attribute, wherein the third application is not connected to a framework service corresponding to the first mode.

8. The method according to claim 7, wherein managing and controlling the third application based on the attribute comprises:
exiting background running if the attribute does not match the first user and the third application is an application running in the background, wherein the first user is the user who uses the electronic device after the first mode is enabled for running; or
skipping responding to an operation of starting the third application if the attribute matches the first user and the third application is an application that is not started when the first mode is enabled.

9. The method according to any one of claims 1 to 8, wherein the method further comprises:
after the first mode is enabled, displaying the first mode on an interface of a setting application.

10. The method according to claim 9, wherein the method further comprises:
in response to a third operation for the setting application, displaying at least one application on a first interface of the setting application, wherein the at least one application comprises the first application and the second application.

11. The method according to claim 10, wherein the at least one application further comprises the third application, and the third application is not connected to the framework service corresponding to the first mode.

12. The method according to claim 11, wherein the method further comprises:
in response to a fourth operation that is based on the first interface, deleting a fourth application from the at least one application, or adding a fifth application to the at least one application.

13. The method according to any one of claims 1 to 12, wherein the method further comprises:
running the first application in the first mode;
detecting a fifth operation for the first application, and performing identity verification on a second user, wherein the second user is a user who performs the fifth operation;
when the verification succeeds, disabling the first mode, and running the first application in a second mode; and
detecting the second operation, and running the second application in the second mode.

14. The method according to any one of claims 1 to 13, wherein content displayed on an interface of the first application or an interface of the second application is associated with the first mode when the first application or the second application runs in the first mode.

15. An application management method, applied to an electronic device, wherein the method comprises:
detecting a first operation for a first application, and enabling a first mode, wherein the first application is a setting application, and the first mode comprises a youth protection mode; and
detecting a second operation of starting a second application, and running the second application in the first mode.

16. The method according to claim 15, wherein before running the second application in the first mode, the method further comprises:
notifying the second application to run the second application in the first mode.

17. The method according to claim 16, wherein the second application is an application running in a background, or the second application is an application that is not started when the first mode is enabled.

18. The method according to claim 17, wherein the second application is the application that is not started when the first mode is enabled, and before notifying the second application to run the second application in the first mode, the method further comprises:
receiving a second message from the second application, wherein the second message is used to query whether to run in the first mode.

19. The method according to any one of claims 16 to 18, wherein notifying the second application to run the second application in the first mode comprises:
sending a first message to the second application, wherein the first message is used to notify the second application to run the second application in the first mode.

20. The method according to claim 19, wherein the first message comprises an age of a first user and/or a first identifier, the first user is a user who uses the electronic device after the first mode is enabled for running, and the first identifier indicates the second application to run the second application in the first mode.

21. The method according to any one of claims 15 to 20, wherein the method further comprises:
after the first mode is enabled, determining an attribute of a third application, and managing and controlling the third application based on the attribute, wherein the third application is not connected to a framework service corresponding to the first mode.

22. The method according to claim 21, wherein managing and controlling the third application based on the attribute comprises:
exiting background running if the attribute does not match the first user and the third application is an application running in the background, wherein the first user is the user who uses the electronic device after the first mode is enabled for running; or
skipping responding to an operation of starting the third application if the attribute matches the first user and the third application is an application that is not started when the first mode is enabled.

23. The method according to any one of claims 15 to 22, wherein the method further comprises:
after the first mode is enabled, displaying the first mode on an interface of the first application.

24. The method according to claim 23, wherein the method further comprises:
in response to a third operation for the setting application, displaying at least one application on a first interface of the first application, wherein the at least one application comprises the first application and the second application.

25. The method according to claim 24, wherein the at least one application further comprises the third application, and the third application is not connected to the framework service corresponding to the first mode.

26. The method according to claim 25, wherein the method further comprises:
in response to a fourth operation that is based on the first interface, deleting a fourth application from the at least one application, or adding a fifth application to the at least one application.

27. The method according to any one of claims 15 to 26, wherein the method further comprises:
detecting a fifth operation for the first application, and performing identity verification on a second user, wherein the second user is a user who performs the fifth operation;
when the verification succeeds, disabling the first mode; and
detecting the second operation, and running the second application in the second mode.

28. The method according to any one of claims 15 to 27, wherein content displayed on an interface of the second application is associated with the first mode when the second application runs in the first mode.

29. A computer-readable storage medium, wherein the computer-readable storage medium is configured to store a computer program, and when the computer program is run on a computer, the computer is enabled to perform the method according to any one of claims 1 to 28.

30. A computer program product, wherein the computer program product comprises a computer program, and when the computer program is run on a computer, the computer is enabled to perform the method according to any one of claims 1 to 28.
